# EUROPÄISCHE PATENTSCHRIFT

(11) **EP 2 825 416 B1**
(45) Veröffentlichungstag und Bekanntmachung des Hinweises auf die Patenterteilung: **31.08.2022**
(21) Anmeldenummer: 13711571.3
(22) Anmeldetag: 14.03.2013
(51) Int. Cl.: B60Q 3/64, B60Q 3/78

(54) **BELEUCHTUNGSEINRICHTUNG, INSBESONDERE EINE KONTURBELEUCHTUNG FÜR EIN KRAFTFAHRZEUG**
LIGHTING DEVICE, IN PARTICULAR CONTOUR LIGHTING FOR A MOTOR VEHICLE
DISPOSITIF D'ÉCLAIRAGE, EN PARTICULIER ÉCLAIRAGE DE CONTOUR POUR VÉHICULE AUTOMOBILE

(30) Priorität: 16.03.2012 DE 102012005397
(43) Veröffentlichungstag der Anmeldung: 21.01.2015
(60) Teilanmeldung: 20214648.6
(73) Patentinhaber: Audi AG, 85045 Ingolstadt (DE)
(72) Erfinder: PFEIL, Marcus, 90537 Feucht (DE); WEHRLIN, Peter, 74172 Neckarsulm (DE)
(74) Vertreter: Schuster, Simon
(86) Internationale Anmeldenummer: PCT/EP2013/000772
(87) Internationale Veröffentlichungsnummer: WO 2013/135387

(56) Entgegenhaltungen:
- DE-U1-202008 008 877
- DE-U1-202010 005 663
- JP-A- 2010 143 338
- US-A1- 2002 121 154

## Beschreibung

Die Erfindung betrifft eine Beleuchtungseinrichtung, insbesondere Konturbeleuchtung für ein Kraftfahrzeug.

Beleuchtungseinrichtungen sind in unterschiedlichster Art und Form bekannt. Sie dienen einerseits zur Raumbeleuchtung, andererseits aber mitunter auch zur Kenntlichmachung oder Hervorhebung bestimmter Gegenstände oder Objekte. Derartige Beleuchtungen werden häufig Konturbeleuchtungen genannt, da sie optisch die Form oder Kontur eines hervorzuhebenden Gegenstandes betonen. Solche Konturbeleuchtungen kommen sowohl bei Geräten oder Maschinen, aber beispielsweise auch in einem Kraftfahrzeug zum Einsatz. Insbesondere dort finden sie beispielsweise Anwendung bei Lautsprechern, Tastern und Bedienfelder, Cupholdern etc. Diese Beleuchtungseinrichtungen sind letztlich Leuchtstreifen, die bestimmte Konturen hervorheben bzw. betonen sollen. Üblicherweise sind solche Konturbeleuchtungen, also Linienbeleuchtungen, mittels eines Lichtleiters realisiert, der entlang der hervorzuhebenden Kontur verläuft. Dieser Lichtleiter ist entweder direkt einsehbar, oder hinter einer davor angeordneten Streuscheibe verbaut. In den Lichtleiter wird Licht an einer Stirnseite eingekoppelt, das Licht tritt seitlich längs des Lichtleiters aus, so dass letztlich ein linienförmiger Lichtstreifen sichtbar ist.

Um die Eigenschaften eines solchen Licht leitenden Elements wie beispielsweise eines Lichtleiters nicht negativ zu beeinflussen benötigt ein solches Element eine Mindestquerschnittsfläche von ca. 7 mm², wobei eine Höhe/Breite bzw. ein Durchmesser von 2,5 mm nicht unterschritten werden darf. Bei Streuscheiben sind die begrenzenden Parameter die Herstell- und Integrierbarkeit in den Bauraum. Heutige bekannte Konturbeleuchtungen weisen aus diesem Grund eine beachtliche Breite auf, d. h., dass der helle Lichtstreifen relativ breit ist, also üblicherweise ca. 2,5 mm oder mehr. Ein derart breiter Lichtstreifen ist jedoch in manchen Fällen nicht wünschenswert, sei es aus optischen Gründen, da beispielsweise das hervorzuhebende Bauteil relativ klein ist und ein derart breiter Lichtstreifen quasi überdimensioniert wäre, sei es aus baulichen Gründen, da sich mitunter ein derart breiter Lichtstreifen nicht immer integrieren lässt

Eine gattungsgemäße Beleuchtungseinrichtung ist aus JP 2010 143338 A bekannt.

Der Erfindung liegt damit das Problem zugrunde, eine Beleuchtungseinrichtung, insbesondere in Form einer Konturbeleuchtung für ein Kraftfahrzeug, anzugeben, die es ermöglicht, einen sehr schmalen Lichtstreifen auszubilden.

Zur Lösung dieses Problems ist erfindungsgemäß eine Beleuchtungseinrichtung, insbesondere eine Konturbeleuchtung für ein Kraftfahrzeug vorgesehen, die Merkmale des beiliegenden Anspruchs 1 umfasst.

Das Gehäuse der erfindungsgemäßen Beleuchtungseinrichtung, die bevorzugt als Konturbeleuchtung dient, ist ein längliches Bauteil, das Gehäuse selbst ist aus einem für Licht transparenten Kunststoffmaterial. Seine Grundform entspricht letztlich der Form des Bauteils, das über die Konturbeleuchtung hervorgehoben werden soll. Am Gehäuse selbst sind gegebenenfalls entsprechende Befestigungsmittel wie Rastelemente und dergleichen vorgesehen, um es am zu beleuchtenden Bauteil fixieren zu können.

Da das Gehäuse aus einem für eingekoppeltes Licht transparenten Kunststoffmaterial ist, ist es folglich möglich, in das Gehäuse Licht einzukoppeln und auszukoppeln. Dies geschieht mittels eines Lichtleiters, der dem Gehäuse zugeordnet ist. Der Lichtleiter strahlt Licht zur Seite hin ab, dieses Licht wird in das Gehäuse eingekoppelt. Da das Gehäuse im verbauten Zustand nur abschnittsweise sichtbar ist, ist zumindest dieser Bereich mit einer für das eingekoppelte Licht nicht transparenten Beschichtung belegt, beispielsweise einer Lackierung oder einer Metallschicht zur Verleihung einer Metalloptik, oder ein nicht transparenter Kunststoffbelag und dergleichen. Um nun eine sehr dünne Lichtaustrittslinie realisieren zu können, ist diese nicht transparente Schicht lokal entfernt, was beispielsweise durch mechanisches Abtragen oder durch Laserabtragen erfolgen kann. Hierüber kann also eine äußerst dünne Linie am Gehäuse freigelegt werden, dort also das Beschichtungsmaterial entfernt werden, so dass folglich, wenn Licht eingekoppelt wird, dieses durch eine sehr dünne Linie austreten kann respektive als sehr dünne Lichtlinie sichtbar ist. Damit ist es möglich, auf einfache Weise einen sehr schmalen Leuchtstreifen erzeugen zu können, um beispielsweise relativ kleine Bauteile konturmäßig hervorzuheben, oder um, wenn gewünscht, eben sehr schmale Konturbeleuchtungen realisieren zu können. Unter einem "lokalen Entfernen" wird erfindungsgemäß aber auch verstanden, die Beschichtung so aufzubringen, dass sie nur in den abzudeckenden Bereichen aufgebracht wird und in dem den schmalen Leuchtstreifen ausbildenden Bereich bereits beim Aufbringen nicht abgeschieden wird. Dies kann ohne weiteres durch entsprechendes Maskieren beim Aufbringen der Beschichtung erfolgen, aber auch durch einen entsprechenden Aufbau des Gehäuses, worauf nachfolgend noch eingegangen wird.

Die Lichtaustrittslinie, also der Bereich, in dem die Beschichtung entfernt ist, weist eine Breite < 1 mm, insbesondere zwischen 0,3 - 0,5 mm auf.

Dies ist ohne weiteres möglich, wenn wie beschrieben die Beschichtung mechanisch oder mit Laser abgetragen wird.

Erfindungsgemäß weist das Gehäuse eine Aufnahme für einen Lichtleiter auf, der das über die Lichtaustrittslinie abzugebende Licht in das Gehäuse emittiert. D. h., dass der Lichtleiter direkt in oder an das Gehäuse selbst gebracht wird, mithin also unmittelbar in das Kunststoffgehäuse Licht emittiert. Die Aufnahme, die ohne weiteres in das Gehäuse, das bevorzugt ein einfaches Kunststoffspritzbauteil ist, eingebracht werden kann, entspricht in ihrer Querschnittsform der Querschnittsform des Lichtleiters, so dass dieser auf einfache Weise beispielsweise über eine Klemmpassung, also einer Art Formschluss, am Gehäuse fixiert werden kann.

Die Beschichtung selbst ist ein Lack, es kann aber auch eine aufgedampfte Schicht oder eine galvanisch abgeschiedenen Schicht sein. Da diese Beschichtung sichtbar ist, kann das Beschichtungsmaterial je nach gewünschter Sichtoptik verwendet werden. Wird eine Metallbeschichtung aufgebracht, so wird der Beleuchtungseinrichtung letztlich eine Metalloptik verliehen, wird ein Lack aufgebracht, so kann sie farbgleich wie das konturmäßig zu beleuchtende Bauteil ausgelegt werden.

Das Gehäuse selbst ist aus einem Kunststoffmaterial, z.B. PMMA oder PC , solange es hinreichend transparent ist. Als Beschichtung bietet sich ein Lack an, der auf nahezu die meisten in Frage kommenden Kunststoffmaterialen, insbesondere PMMA oder PC appliziert werden kann. Jedoch kann nicht auf alle in Frage kommenden Kunststoffmaterialen eine Metallschicht, insbesondere eine Chromschicht appliziert werden, insbesondere nicht auf PMMA oder PC. Um dies, insbesondere im Falle von PMMA und PC zu ermöglichen, sieht die Erfindung vor, das Gehäuse aus zwei unterschiedlichen, jedoch hinreichend transparenten Kunststoffmaterialen zu fertigen, die vorzugsweise in einem 2K-Verfahren simultan verarbeitet werden können. Auf das eigentliche, den Gehäuse-Hauptkörper bildende erste Kunststoffmaterial, z.B. PMMA oder PC wird eine ebenfalls ausreichend transparente Schicht aus einem zweiten Kunststoffmaterial, z.B. ABS gebracht, die als Träger für die galvanisch aufzubringende Metallschicht oder - sofern erforderlich - den Mehrschichtaufbau (z.B. eine Schichtstruktur aus Ni - Cu - Cr) dient. Die Metallschicht oder die Schichtstruktur wird dann entweder großflächig aufgebracht und anschließend lokal zur Bildung der Austrittslinie wieder mechanisch oder mittels Laser entfernt, oder sie wird bereits unter Ausmaskieren der Austrittslinie abgeschieden.

Dabei ist es denkbar, die zweite Kunststoffschicht bereits so aufzubringen, dass ein die Lichtaustrittslinie bildender schmaler Streifen des ersten Kunststoffmaterials, also z.B. der PMA oder PC frei bleibt, also nicht mit dem zweiten Kunststoffmaterial wie z.B. ABS belegt wird. Wird nun auf die zweite Kunststoffschicht die Metallschicht(struktur) galvanisch abgeschieden, so haftet diese nicht auf dem freiliegenden PMMA oder PC, so dass die Austrittslinie automatisch frei bleibt.

Neben der Beleuchtungseinrichtung selbst betrifft die Erfindung ferner ein Kraftfahrzeug gemäß Anspruch 9, umfassend wenigstens eine erfindungsgemäße Beleuchtungseinrichtung , sowie ein Verfahren gemäß Anspruch 10 zur Herstellung einer erfindungsgemäßen Beleuchtungseinrichtung.

Weitere Vorteile, Merkmale und Einzelheiten der Erfindung ergeben sich aus den im Folgenden ausgeführten Ausführungsbeispielen sowie anhand der Zeichnungen:
- Fig. 1: eine Prinzipdarstellung einer erfindungsgemäßen Beleuchtungseinrichtung einer ersten Ausführungsform im Querschnitt,
- Fig. 2: eine Prinzipdarstellung einer Beleuchtungseinrichtung im Querdie aber nicht Teil der Erfindung ist.
- Fig. 3: eine Prinzipdarstellung einer erfindungsgemäßen Beleuchtungseinrichtung einer zweiten Ausführungsform im Querschnitt mit einem aus zwei unterschiedlichen Kunststoffmaterialien bestehenden Gehäuse,
- Fig. 4: eine Prinzipdarstellung einer erfindungsgemäßen Beleuchtungseinrichtung einer dritten Ausführungsform im Querschnitt mit einem aus zwei unterschiedlichen Kunststoffmaterialien bestehenden Gehäuse, und
- Fig. 5 - 7: Prinzipdarstellungen weiterer erfindungsgemäßer Beleuchtungseinrichtungen unterschiedlicher Geometrie im Querschnitt mit einem aus zwei unterschiedlichen Kunststoffmaterialien bestehenden Gehäuse.

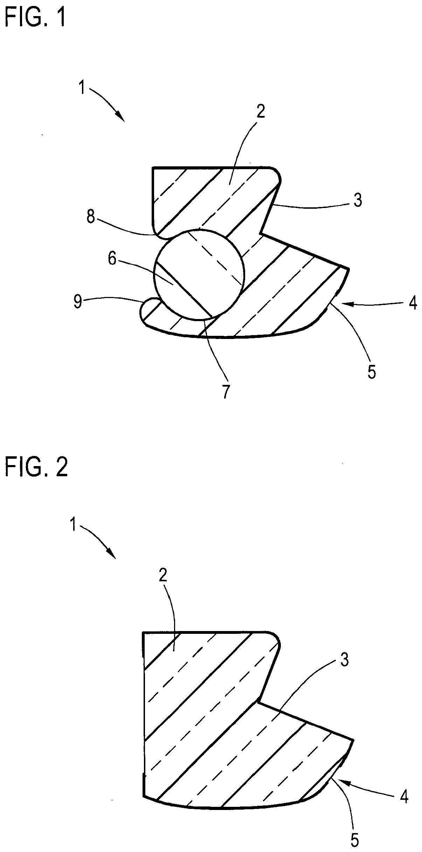

Fig. 1 zeigt eine erfindungsgemäße Beleuchtungseinrichtung 1, umfassend ein Gehäuse 2 aus einem für in das Gehäuse eingekoppeltes Licht transparenten Kunststoff, beispielsweise PMMA. Das Gehäuse ist länglich, Fig. 1 zeigt lediglich eine Schnittansicht. Seine Grundform entspricht letztlich der Form des Bauteils respektive der Kontur, die beleuchtet werden soll.

Der in Fig. 1 gezeigte Querschnitt ist lediglich exemplarisch. Selbstverständlich weist das Gehäuse eine Querschnittsform auf, die es ermöglicht, dort befestigt oder integriert werden zu könne, wo es beispielsweise kraftfahrzeugseitig verbaut werden soll. D. h., dass die Darstellung keinesfalls abschließend ist. Selbstverständlich ist es möglich, am Gehäuse entsprechende Rast- oder Klemmelemente und ähnliches auszubilden, wie dies beispielsweise über die Stufe angedeutet ist.

Das Gehäuse 2 zwar selbst ist über seine nahezu gesamte Fläche im gezeigten Beispiel mit einer Beschichtung 3 versehen, beispielsweise einem Lack, einer aufgedampften Schicht oder einer galvanisch abgeschiedenen Schicht. Diese Schicht ist für in das Gehäuse 2 eingekoppelte Licht nicht transparent. Lediglich im Bereich 4 ist die Beschichtung entfernt, so dass sich dort, also an der Sichtseite, eine Lichtaustrittslinie 5 ergibt, aus der in das Gehäuse zwar eingekoppeltes Licht austreten kann.

Im gezeigten Ausführungsbeispiel wird das Licht in das Gehäuse 2 mittels eines Lichtleiters 6 eingekoppelt. Der Lichtleiter 6 ist unmittelbar im Gehäuse 2 aufgenommen. Hierzu ist im Gehäuse 2 eine im gezeigten Beispiel querschnittliche im Wesentliche runde Aufnahme 7 ausgebildet, in die der querschnittliche ebenfalls runde Lichtleiter 6 eingesetzt ist. Dies ist ohne weiteres über einen leichten Klemmsitz möglich, in dem, wie gezeigt, eine beidseitige leichte Hinterschneidung realisiert ist, nämlich mittels der beiden Schultern 8, 9.

Wird nun Licht in den Lichtleiter 6 von einer Stirnseite her eingekoppelt, so läuft das Licht durch den Lichtleiter 6. Aufgrund der Lichtleiterstruktur wird das Licht nicht nur längs geführt, sondern auch zur Seite ausgekoppelt und zwangsläufig in das Gehäuse 2 eingekoppelt. Dort kann es lediglich über die Lichtaustrittslinie 5 nach außen austreten, ist also dort in Form einer dünnen Lichtlinie, die die Konturbeleuchtung bildet, sichtbar.

Fig. 2 zeigt eine weitere, nicht erfindungsgemäße Ausführungsform einer Beleuchtungseinrichtung 1, wiederum umfassend ein Gehäuse 2, das hier jedoch nicht der Aufnahme eines Lichtleiters dient, sondern letztlich selbst als Lichtleiter respektive Streuscheibe fungiert. Seine Querschnittsform entspricht letztlich der Darstellung aus Fig. 1, jedoch ist hier keine separate Lichtleiteraufnahme ausgebildet. Das Licht wird unmittelbar an eine Stirnfläche des Gehäuses, das wie gesagt selbst den Lichtleiter bildet, eingekoppelt und läuft längs des Gehäuses. Aufgrund einer nicht näher gezeigten Strukturierung zumindest an der linksseitigen Gehäusefläche wird erreicht, dass das im Gehäuse 2 geführte Licht auch in das Volumen und damit zur Seite hin reflektiert wird. Nachdem auch hier die Außenseite des Gehäuses nahezu vollständig mit einer Beschichtung 3 belegt ist, die wiederum nur im Bereich 4 mechanisch oder beispielsweise mittels Laser entfernt ist, um eine dünne Lichtaustrittslinie 5 zu bilden, tritt das gestreute Licht wiederum nur durch diese dünne Lichtaustrittslinie 5 aus, ist also als sehr dünne Linie sichtbar.

Die Breite der Lichtaustrittslinie 5 liegt im bevorzugten Bereich zwischen 0,3 - 0,5 mm. Das Gehäuse selbst ist bevorzugt aus PMMA, jedoch kann auch ein anderer Kunststoff, solange er hinreichend transparent für das in ihm geführte Licht ist, verwendet werden.

Gleichermaßen ist denkbar, auch ein eingefärbtes Kunststoffmaterial zu verwenden, wenn eine farbige Lichtemission zur Bildung des Konturlichts stattfinden soll.

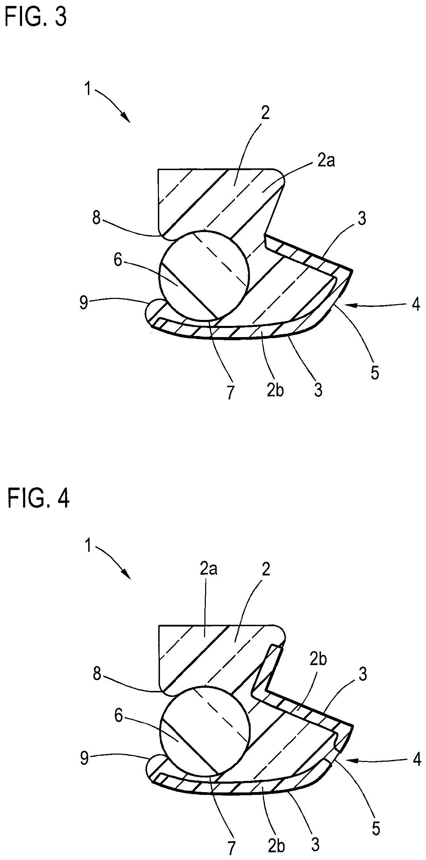

Fig. 3 zeigt eine Beleuchtungseinrichtung einer weiteren Ausführungsform einer erfindungsgemäßen Beleuchtungseinrichtung 1, bei der das Gehäuse 2 aus zwei unterschiedlichen Kunststoffmaterialien 2a und 2b besteht. Das Kunststoffmaterial 2a, z.B. PMMA oder PC, bildet den Gehäuse-Hauptkörper. In einem 2K-Verfahren ist das Kunststoffmaterial 2b, z.B. ABS, also ein ebenfalls transparentes oder zumindest transluzentes Material, außenseitig auf das erste Kunststoffmaterial 2a gebracht. Es dient als Träger für eine in Form einer galvanisch aufgebrachten oder aufgedampften Metallschicht oder Metallmehrschichtstruktur aufzubringenden Beschichtung 3, z.B. einer Cr-Schicht oder einer Schichtstruktur aus Ni - Cu - Cr. Die Beschichtung 3 ist auch hier lokal entfernt, z.B. mechanisch oder mitels Laser, um die Lichtaustrittslinie 5 zu bilden. D.h., dass das zweite Kunststoffmaterial im Bereich 4 freiliegt. Alternativ kann die Beschichtung 3 auch nur lokal abgeschieden werden, d.h. dass der Bereich 4 schon beim Abscheiden ausgebildet und das zweite Kunststoffmaterial nicht beschichtet wird.

Fig. 4 zeigt eine Ausführungsform ähnlich der aus Fig. 3, jedoch ist hier das zweite Kunststoffmaterial 2b nicht großflächig, sondern nur lokal auf das erste Kunststoffmaterial 2a aufgebracht. Dieses liegt im Bereich 4 frei, bildet also die Lichtaustrittslinie 5 selbst aus. Auf das zweite Kunststoffmaterial 2b ist wiederum die Beschichtung 3 in Form einer Metallschicht oder Metallschichtstruktur galvanisch abgeschieden oder aufgedampft, wobei sich die Beschichtung 3 nur auf dem zweiten Kunststoffmaterial 2b, also dem ABS abscheidet, während das erste Kunststoffmaterial 2a nicht belegt wird bzw. die metallene Beschichtung hierauf nicht haftet.

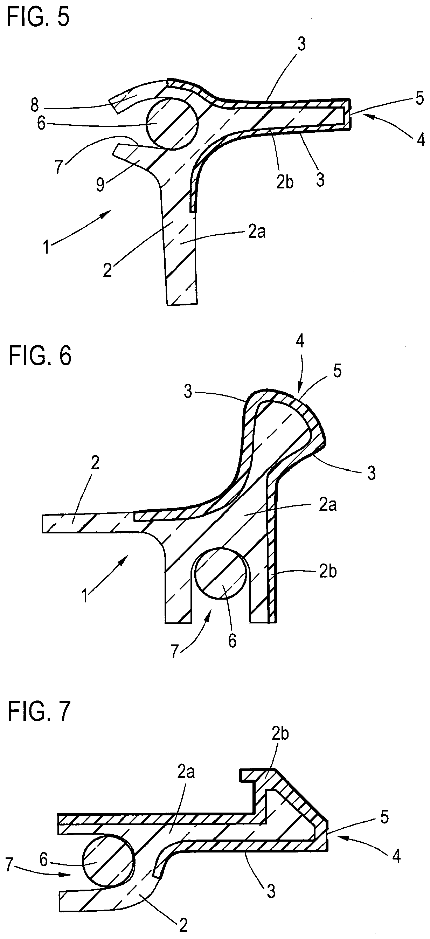

Die Fig. 5 bis 7 zeigen weitere, geometrisch unterschiedliche Ausführungen von erfindungsgemäßen Beleuchtungseinrichtungen, bei denen das jeweilige Gehäuse 2 ebenfalls aus zwei Kunststoffmaterialien 2a und 2b besteht. Das zweite Kunststoffmaterial ist, ähnlich der Ausgestaltung nach Fig. 3, großflächig als Metallbeschichtungsträger aufgebracht. Die Beschichtung 3 ist lokal zur Bildung eines freiliegenden Bereichs, der die Lichtaustrittslinie 5 bildet, lokal entfernt, oder es ist durch Ausmaskieren des Bereichs 4 nur lokal abgeschieden.

Der Grundaufbau bezüglich der runden Aufnahme 7,die gegebenenfalls verspiegelt sein kann, und in der der Lichtleiter 6 aufgenommen ist, ist auch den Ausführungsformen nach den Fig. 3 bis 7 gemeinsam. Auch kann das oder können die Kunststoffmaterialien bei Bedarf eingefärbt sein. Anstelle der beschriebenen Materialien (PMMA bzw. PC und ABS) können natürlich auch andere, hinreichend transparente Kunststoffmaterialien verwendet werden.

## Patentansprüche

1. Beleuchtungseinrichtung, insbesondere Konturbeleuchtung für ein Kraftfahrzeug, mit einem Gehäuse (2) aus einem für in das Gehäuse eingekoppeltes Licht transparenten Kunststoffmaterial, das als Streuscheibe fungiert und zumindest in dem Bereich seiner Außenseite, der in der Montagestellung sichtbar ist, mit einer für das eingekoppelte Licht nicht transparenten Beschichtung (3) belegt ist, die lokal zur Bildung einer schmalen Lichtaustrittslinie (5) entfernt ist, und mit einem Lichtleiter (6), der das über die Lichtaustrittslinie (5) abzugebende Licht in das Gehäuse (2) emittiert, wobei das Gehäuse (2) eine Aufnahme (7) für den Lichtleiter (6) aufweist,
**dadurch gekennzeichnet, dass**
die Lichtaustrittslinie (5) eine Breite kleiner 1 mm aufweist, dass die Beschichtung (3) ein Lack, eine aufgedampfte Schicht oder eine galvanisch abgeschiedene Schicht ist, und dass der Lichtleiter (6) eine derartige Lichtleiterstruktur aufweist, dass von einer Stirnseite des Lichtleiters (6) her eingekoppeltes Licht den Lichtleiter (6) durchläuft, wobei das Licht nicht nur längs geführt, sondern auch zur Seite ausgekoppelt und zwangsweise in das Gehäuse eingekoppelt wird.

2. Beleuchtungseinrichtung nach Anspruch 1,
**dadurch gekennzeichnet,**
**dass** die Lichtaustrittslinie (5) eine Breite zwischen 0,3 - 0,5 mm aufweist.

3. Beleuchtungseinrichtung nach Anspruch 1 oder 2,
**dadurch gekennzeichnet,**
**dass** das Gehäuse aus nur einem Kunststoffmaterial besteht, das mit der Beschichtung (3) belegt ist.

4. Beleuchtungseinrichtung nach Anspruch 1 oder 2,
**dadurch gekennzeichnet,**
**dass** das Gehäuse (2) aus einem den Gehäusehauptkörper bildenden ersten Kunststoffmaterial (2a) besteht, das zumindest abschnittsweise außenseitig mit einem zweiten Kunststoffmaterial (2b) belegt ist, das mit der Beschichtung (3) versehen ist.

5. Beleuchtungseinrichtung nach Anspruch 4,
**dadurch gekennzeichnet,**
**dass** das zweite Kunststoffmaterial (2b) als einteilige Materialfläche aufgebracht ist, oder dass das zweite Kunststoffmaterial (2b) derart aufgebracht ist, dass das erste Kunststoffmaterial ,(2a) im Bereich (4) der Lichtaustrittslinie (5) freiliegt und in diesem Bereich nicht beschichtet ist.

6. Beleuchtungseinrichtung nach einem der vorangehenden Ansprüche,
**dadurch gekennzeichnet,**
**dass** das Kunststoffmaterial PMMA oder PC ist, oder dass das erste Kunststoffmaterial (2a) PMMA oder PC und das zweite Kunststoffmaterial (2b) ABS ist.

7. Beleuchtungseinrichtung nach einem der vorangehenden Ansprüche,
**dadurch gekennzeichnet,**
**dass** das Kunststoffmaterial oder das erste Kunststoffmaterial eingefärbt ist.

8. Beleuchtungseinrichtung nach einem der vorangehenden Ansprüche,
**dadurch gekennzeichnet,**
**dass** die Beschichtung (3) mechanisch oder mittels Laser abgetragen ist.

9. Kraftfahrzeug, umfassend wenigstens eine Beleuchtungseinrichtung (1) nach einem der vorangehenden Ansprüche.

10. Verfahren zur Herstellung einer Beleuchtungseinrichtung, wobei auf ein Gehäuse (2) der Beleuchtungseinrichtung, das aus einem für in das Gehäuse (2) eingekoppeltes Licht transparenten Kunststoffmaterial besteht und als Streuscheibe fungiert, zumindest in dem Bereich seiner Außenseite, der in der Montagestellung sichtbar ist, eine für das eingekoppelte Licht nicht transparente Beschichtung (3) aufgebracht wird, die lokal zur Bildung einer schmalen Lichtaustrittslinie (5), die eine Breite kleiner 1 mm aufweist, entfernt ist, wobei die Beschichtung (3) ein Lack, eine aufgedampfte Schicht oder eine galvanisch abgeschiedene Schicht ist, wobei das Gehäuse (2) eine Aufnahme (7) aufweist, in die ein Lichtleiter (6), der das über die Lichtaustrittslinie (5) abzugebende Licht in das Gehäuse (2) emittiert, eingesetzt wird, wobei der Lichtleiter (6) eine derartige Lichtleiterstruktur aufweist, dass von einer Stirnseite des Lichtleiters (6) her eingekoppeltes Licht den Lichtleiter (6) durchläuft, wobei das Licht nicht nur längs geführt, sondern auch zur Seite ausgekoppelt und zwangsweise in das Gehäuse eingekoppelt wird.

## Claims

1. Lighting device, in particular contour lighting for a motor vehicle, with a housing (2) made from a plastic material which is transparent to light coupled into the housing, which functions as a scattering disc and at least in the region of its outer side, which is visible in the assembled position, is coated with a coating (3) that is not transparent to the coupled-in light, which coating is removed locally to form a narrow light outlet line (5), and with a light guide (6) which emits the light to be output via the light outlet line (5) into the housing (2), wherein the housing (2) has a mount (7) for the light guide (6),
**characterised in that**
the light outlet line (5) has a width of less than 1 mm, **in that** the coating (3) is a paint, a vapour-deposited layer or galvanically deposited layer, and **in that** the light guide (6) has such a light guide structure that coupled-in light coming from an end face of the light guide (6) passes through the light guide (6), wherein the light is guided not only longitudinally but also is coupled-out to the side and is forced to be coupled into the housing.

2. Lighting device according to claim 1,
**characterised in that**
the light outlet line (5) has a width between 0.3 - 0.5 mm.

3. Lighting device according to claim 1 or 2,
**characterised in that**
the housing is made of only one plastic material that is coated with the coating (3).

4. Lighting device according to claim 1 or 2,
**characterised in that**
the housing (2) consists of a first plastic material (2a) forming the main housing body, which is coated at least partially on an outer surface with a second plastic material (2b), which is provided with the coating (3).

5. Lighting device according to claim 4,
**characterised in that**
the second plastic material (2b) is applied as a one-piece material surface area, or in that the second plastic material (2b) is applied such that the first plastic material (2a) is exposed in the region (4) of the light-emitting line (5) and is not coated in this region.

6. Lighting device according to any of the preceding claims,
**characterised in that**
the plastic material is PMMA or PC or that the first plastic material (2a) is PMMA or PC and the second plastic material (2b) is ABS.

7. Lighting device according to any of the preceding claims,
**characterised in that**
the plastic material or the first plastic material is coloured.

8. Lighting device according to any of the preceding claims,
**characterised in that**
the coating (3) is removed mechanically or by means of a laser.

9. Motor vehicle, comprising at least one lighting device (1) according to any of the preceding claims.

10. Method for producing a lighting device, wherein onto a housing (2) of the lighting device, which consists of a plastic material transparent to light coupled into the housing (2) and functions as a scattering disc, at least in the region of its outer side which is visible in the assembled position, a coating (3) which is not transparent to the coupled-in light is applied, which is removed locally to form a narrow light outlet line (5) which has a width of less than 1 mm, wherein the coating (3) is a paint, a vapour-deposited layer or a galvanically deposited layer, wherein the housing (2) has a mount (7) into which a light guide (6) is inserted which emits the light to be given out via the light outlet line (5) into the housing (2), wherein the light guide (6) has such a light guide structure that coupled-in light coming from an end face of the light guide (6) passes through the light guide (6), wherein the light is guided not only longitudinally but also is coupled-out to the side and is forced to be coupled into the housing.

## Revendications

1. Dispositif d'éclairage, en particulier éclairage de contour pour un véhicule automobile, avec un boîtier (2) en matière plastique transparente à la lumière introduite dans le boîtier, qui agit comme une vitre diffusante et est recouvert, au moins dans la zone de son côté extérieur, qui est visible en position de montage, d'un revêtement (3) qui n'est pas transparent à la lumière introduite dans le boîtier, qui est retiré localement pour former une étroite ligne d'émission de lumière (5), et avec un guide de lumière (6) qui émet dans le boîtier (2) la lumière à émettre par la ligne d'émission de lumière (5), dans lequel le boîtier (2) présente un logement (7) pour le guide de lumière (6),
**caractérisé en ce**
**que** la ligne d'émission de lumière (5) présente une largeur inférieure à 1 mm, en ce que le revêtement (3) est un vernis, une couche déposée par évaporation ou une couche déposée galvaniquement, et en ce que le guide de lumière (6) présente une structure de guide de lumière telle que de la lumière introduite par une face frontale du guide de lumière (6) traverse le guide de lumière (6), dans lequel la lumière est non seulement guidée longitudinalement, mais aussi émise latéralement et introduite de force dans le boîtier.

2. Dispositif d'éclairage selon la revendication 1,
**caractérisé en ce**
**que** la ligne d'émission de lumière (5) présente une largeur entre 0,3 - 0,5 mm.

3. Dispositif d'éclairage selon la revendication 1 ou 2,
**caractérisé en ce**
**que** le boîtier est constitué d'une seule matière plastique, qui est recouverte du revêtement (3).

4. Dispositif d'éclairage selon la revendication 1 ou 2,
**caractérisé en ce**
**que** le boîtier (2) est constitué d'une première matière plastique (2a) qui forme le corps principal du boîtier et qui est recouverte, au moins par sections sur le côté extérieur, d'une seconde matière plastique (2b) qui est dotée du revêtement (3).

5. Dispositif d'éclairage selon la revendication 4,
**caractérisé en ce**
**que** la seconde matière plastique (2b) est appliquée en tant que surface d'un seul tenant, ou en ce que la seconde matière plastique (2b) est appliquée de sorte que la première matière plastique (2a) est exposée dans la zone (4) de la ligne d'émission de lumière (5) et n'est pas revêtue dans cette zone.

6. Dispositif d'éclairage selon l'une quelconque des revendications précédentes,
**caractérisé en ce**
**que** la matière plastique est du PMMA ou du PC, ou que la première matière plastique (2a) est du PMMA ou du PC et la seconde matière plastique (2b) est de l'ABS.

7. Dispositif d'éclairage selon l'une quelconque des revendications précédentes,
**caractérisé en ce**
**que** la matière plastique ou la première matière plastique est colorée.

8. Dispositif d'éclairage selon l'une quelconque des revendications précédentes,
**caractérisé en ce**
**que** le revêtement (3) est enlevé mécaniquement ou au moyen d'un laser.

9. Véhicule automobile comprenant au moins un dispositif d'éclairage (1) selon l'une quelconque des revendications précédentes.

10. Procédé de fabrication d'un dispositif d'éclairage, dans lequel est appliqué sur un boîtier (2) du dispositif d'éclairage, qui est constitué d'une matière plastique transparente à la lumière introduite dans le boîtier (2) et fonctionne en tant que vitre diffusante, au moins dans la zone de son côté extérieur, qui est visible en position de montage, un revêtement (3) qui n'est pas transparent à la lumière introduite, qui est retiré localement pour former une étroite ligne d'émission de lumière (5) qui présente une largeur inférieure à 1 mm, dans lequel le revêtement (3) est un vernis, une couche déposée par évaporation ou une couche déposée galvaniquement, dans lequel le boîtier (2) présente un logement (7) dans lequel est inséré un guide de lumière (6) qui émet la lumière à émettre dans le boîtier (2) par l'intermédiaire de la ligne d'émission de lumière (5), dans lequel le guide de lumière (6) présente une structure de guide de lumière telle que de la lumière introduite par une face frontale du guide de lumière (6) traverse le guide de lumière (6), dans lequel la lumière est non seulement guidée longitudinalement, mais aussi émise latéralement et introduite de force dans le boîtier.
